# EUROPEAN PATENT SPECIFICATION

(11) **EP 0 762 617 B1**
(45) Date of publication and mention of the grant of the patent: **24.03.1999**
(21) Application number: 96112455.9
(22) Date of filing: 01.08.1996
(51) Int. Cl.: H02K 21/04, H02K 1/27, H02K 19/22

(54) **Alternator for vehicle**
Wechselstromgenerator für Kraftfahrzeugen
Alternateur pour véhicule

(30) Priority: 11.08.1995 JP 205427/95
(43) Date of publication of application: 12.03.1997
(73) Proprietor: DENSO CORPORATION, Kariya-City, Aichi-Pref. (JP)
(72) Inventor: Ishikawa, Hiroaki, Kariya-city, Aichi-pref. 448 (JP)
(74) Representative: Winter, Brandl, Fürniss, Hübner, Röss, Kaiser, Polte, Kindermann Partnerschaft

(56) References cited:
- GB-A- 1 036 986
- GB-A- 2 281 665
- US-A- 4 959 577
- US-A- 5 306 977
- PATENT ABSTRACTS OF JAPAN vol. 010, no. 259 (E-434), 4 September 1986 & JP-A-61 085045 (NIPPON DENSO CO LTD), 30 April 1986,

## Description

### BACKGROUND OF THE INVENTION

### 1. Field of the Invention

The present invention relates to a vehicular alternator having Lundell type rotor and permanent magnets disposed between the adjacent claw pole pieces of the magnetic poles.

### 2. Description of the Related Art

A conventional alternator for a vehicle proposed in JP-A No. 61-85045, for instance, has a field rotor having a pair of Lundell type magnetic poles and a field winding wound around a magnetic core of the magnetic poles. In this alternator, permanent magnets are disposed between the circumferentially adjacent claw-shaped pole pieces of the Lundell type magnetic poles to enhance the output by reducing leakage magnetic flux across the claw-shaped pole pieces thereby increasing magnetic flux effective for power generation. In this prior art vehicular alternator, each permanent magnet is disposed substantially in the entire region between the side surfaces of the claw-shaped pole pieces substantially parallel to each other, or the magnetic field strength of the permanent magnets is adjusted by properly determining the number or arrangement of the permanent magnets so that the output voltage when the field current is zero may not exceed a charging voltage appropriate for charging a battery.

Recently, the normal electrical load of vehicles has progressively been increased and the difference between normal electrical load and maximum electrical load is very small in many recent vehicles. Therefore, in many cases, the aforesaid adjustment of magnetic field strength is unnecessary even if strong magnets are employed. Employment of permanent magnets entails increase in costs and hence it is desirable that an increase in costs attributable to the employment of permanent magnets is counterbalanced by an increase in output. The prior art employs an excessively large amount of permanent magnets or is able to employ an amount of permanent magnets less than that is necessary for the aforesaid magnetic field strength adjustment.

### SUMMARY OF THE INVENTION

The present invention has been made in view of the foregoing problems and, therefore, a main object of the present invention is to provide an alternator for a vehicle which increases an output per unit weight of permanent magnets and attain an excellent economic effect and a high capability to withstand high-speed operation.

Such an alternator comprises a rotor having a pair of Lundell type magnetic poles each provided with a plurality of claw-shaped pole pieces and disposed axially opposite to each other with the pole pieces meshing with each other, and permanent magnets each disposed between opposed side surfaces of the circumferentially adjacent claw-shaped pole pieces, and magnetized so as to suppress leakage magnetic flux across the claw-shaped pole pieces. Each permanent magnet is disposed at the longitudinally middle portion of the claw-shaped pole piece and the ratio of the length of the permanent magnet to that of the claw-shaped pole piece is in the range of 50% to 80%.

Since the cross-section area of the claw-shaped pole piece perpendicular to the rotor axis decreases toward the extremity of the claw-shaped pole piece, the magnetic resistance of the claw-shaped pole piece increases toward the extremity of the claw-shaped pole piece. Consequently, it is difficult for magnetic flux to pass across the side surfaces of the adjacent claw-shaped pole pieces in a region where the ratio of the length of the permanent magnet to that of the side surface of the claw-shaped pole piece is greater than 80%. Since magnetic flux is able to pass easily across the side surfaces of the adjacent claw-shaped pole pieces in a region where the ratio is below 50%, magnetic flux is able to flow into a region where the permanent magnet is not present. Accordingly, the leakage of magnetic flux can be most effectively suppressed and the magnetic flux that contributes to power generation can be increased if the permanent magnet is disposed in the region where the density of leakage magnetic flux levels out substantially at a maximum, and the permanent magnet has a ratio of the length to that of the claw-shaped pole piece is in the range of 50% to 80%.

In the alternator according to the first aspect of the present invention, each permanent magnet is disposed so that its center of gravity coincides with a position substantially corresponding to the middle between the opposed side surfaces with respect to a direction along the ridge.

When a centrifugal force acts on the permanent magnet as the rotor rotates, load resulting from the centrifugal force acts on the adjacent claw-shaped pole pieces on the opposite sides of the permanent magnet with respect to a circumferential direction. Since the center of gravity of the permanent magnet is substantially at the middle between the side surfaces of the adjacent claw-shaped pole pieces, the load resulting from the centrifugal force is distributed substantially evenly to the claw-shaped pole pieces, and the strength of the claw-shaped pole pieces against rotation is enhanced.

### BRIEF DESCRIPTION OF THE DRAWINGS

Other objects, features and characteristics of the present invention as well as the functions of related parts of the present invention will become clear from a study of the following detailed description, the appended claims and the drawings. In the drawings:

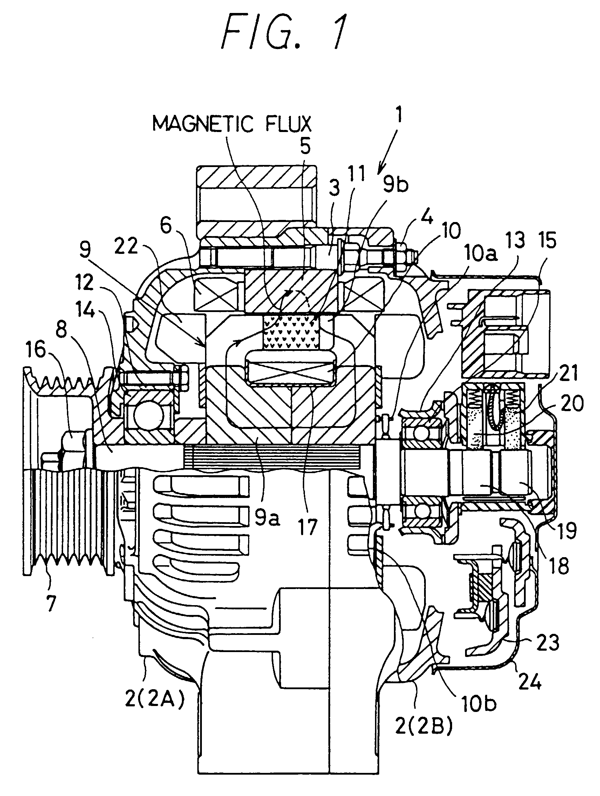

Fig. 1 is a cross-sectional side view illustrating an alternator for a vehicle according to the present invention;
Fig. 2A is a development showing the positional relation between claw-shaped pole pieces and permanent magnets, and Fig. 2B is a cross-sectional view of the claw-shaped pole pieces and the permanent magnets;
Fig. 3 is a schematic plan view of claw-shaped pole pieces for explaining leakage flux;
Fig. 4 is a graph showing the variation of leakage flux density with distance from the middle of the side surface of a claw-shaped pole piece;
Fig. 5 is a graph for explaining the effects of an alternator according to the present invention;
Fig. 6 is a graph comparatively showing the output current of an alternator provided with permanent magnets and that of an equivalent alternator not provided with the permanent magnets;
Fig. 7A is a development showing the positional relationship between claw-shaped pole pieces and permanent magnets, and Fig. 7B is a cross-sectional view of the claw-shaped pole pieces and the permanent magnets according to a second embodiment; and
Fig. 8A is a development showing the positional relationship between claw-shaped pole pieces and permanent magnets, and Fig. 8B is a sectional view of the claw-shaped pole pieces and the permanent magnets according to a third embodiment.

### DETAILED DESCRIPTION OF THE PREFERRED EMBODIMENTS

Alternator for a vehicles in preferred embodiments according to the present invention will be described hereinafter with reference to the accompanying drawings.

### (First Embodiment)

The alternator for a vehicle 1 comprises a stator serving as an armature, which will be described later, a rotor serving as a means for creating magnetic fields, which will be described later, and a housing 2 containing the stator and the rotor.

The housing 2 comprises a front frame 2A and a rear frame 2B, which are made of aluminum by die casting and joined together at their end faces in contact with each other with a plurality of stud bolts 3 and nuts 4.

The stator has a stator core 5 pressed in the housing 2 and fixed in place, and armature windings 6 wound on the stator core 5.

The stator core 5 is formed by superposing a plurality of annular thin steel sheets and provided in its inner circumference with a plurality of slots, not shown.

The armature windings 6 are connected in a Y-connection or a Δ connection and inserted in the slots of the stator core 5. When the rotor rotates relative to the stator, ac voltages are produced in the armature windings 6.

The rotor has a shaft 8 to which the rotative force of an engine is transmitted through a pulley 7, a pair of Lundell magnetic poles 9 fixedly put on the shaft 8 by pressure, a field winding 10 wound on the Lundell magnetic poles 9, and a plurality of permanent magnets 11 attached to the Lundell magnetic poles 9.

The shaft 8 is supported for rotation in bearings 14 and 15 fixedly fitted in the bosses 12 and 13 of the front frame 2A and the rear frame 2B, respectively. The pulley 7 is mounted on one end of the shaft 8 on the outer side of the front frame 2A and is fixedly held on the shaft 8 with a locknut 16.

Each of the pair of Lundell magnetic poles 9 has a cylindrical boss 9a, and a plurality of claw-shaped pole pieces 9b formed on the outer circumference of the boss 9a. The bosses 9a of the pair of Lundell magnetic poles 9 are pressed in the bore of a bobbin 17 from the opposite ends of the field winding 10, respectively, so that the claw-shaped pole pieces 9b thereof are meshed on the outer circumference of the field winding 10.

The field winding 10 is connected by lead wires 10a and 10b to two slip rings 18 and 19 attached to the circumference of the shaft 8. An exciting current is supplied from a battery, not shown, through two brushes 20 and 21 respectively in sliding contact with the outer circumferences of the slip rings 18 and 19 to the field winding 10. When the exciting current flows through the field winding 10, all the claw-shaped pole pieces 9b of one of the pair of Lundell magnetic poles 9 become S poles and those of the other Lundell magnetic pole 9 become N poles.

Centrifugal cooling fans 22 are fixed to the axially opposite ends of the pair of Lundell magnetic poles 9, respectively, by welding or the like to produce currents of cooling air when the Lundell magnetic poles 9 rotate.

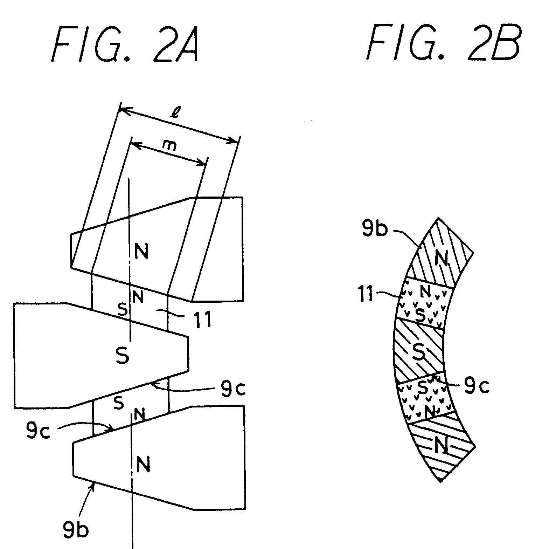

As shown in Figs. 2A and 2B, the permanent magnets 11 are disposed between the opposed side surfaces 9c of the adjacent claw-shaped pole pieces 9b and are held fixedly in place with an adhesive or the like. Each permanent magnet 11 is magnetized so that the respective polarities of its circumferentially opposite ends are the same as those of the claw-shaped pole pieces 9b contiguous with the circumferential opposite ends, respectively. Each permanent magnet 11 is disposed at a longitudinally middle portion of a parallelopiped space formed between the adjacent claw-shaped pole pieces 9b. The permanent magnet 11 has a length thereof whose ratio to the length of the side surface 9c of the claw-shaped pole piece 9b is in the range of 50% to 80%, preferably 65%. The permanent magnet 11 is disposed so that its center of gravity is substantially at the middle of the parallelopiped space between the opposed side surfaces 9c. In other words, the axial middle of the permanent magnet 11 coincides with the axial middle of the parallelopiped space between the circumferentially adjacent claw-shaped pole pieces 9b as shown in Fig. 2A.

Electrical devices including the slip rings 18 and 19, the brushes 20 and 21, a rectifier 23 for rectifying ac currents induced in the armature windings 6, and a voltage regulator, not shown, for maintaining the terminal voltage of the alternator for a vehicle within required limits are attached to the outer surface of the rear frame 2B and covered with an end cover 24.

The operation of the alternator for a vehicle in this embodiment will be described hereinafter.

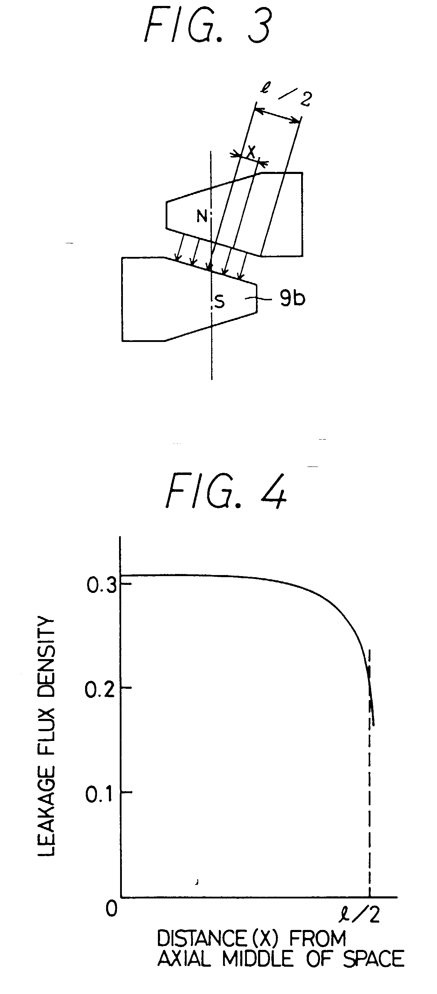

The rotative power of the engine is transmitted through a V belt, not shown, and the pulley 7 to the shaft 8 to drive the rotor for rotation. An exciting current is supplied through the brushes 20 and 21, and the slip rings 18 and 19 to the field winding 10 from the battery to magnetize the claw-shaped pole pieces 9b so that those of one of the Lundell type magnetic poles 9 become S poles and those of the other Lundell type magnetic pole 9 become N poles. Magnetic lines of force representing magnetic flux produced by the field winding 10 from the claw-shaped pole pieces 9b of one of the Lundell type magnetic pole 9 through the stationary core 5 to the claw-shaped pole pieces 9b of the other Lundell type magnetic pole 9. If the permanent magnet 11 is not disposed between the circumferentially adjacent claw-shaped pole pieces 9b as shown in Fig. 3, leakage flux passes across the side surfaces 9c of the circumferentially adjacent claw-shaped pole pieces 9b.

As shown in Fig. 4, measured data obtained through experiments proved that leakage flux density is a maximum at the axial middle of the space between the adjacent claw-shaped pole pieces 9b, i.e., the middle with respect to the axis of the stationary core 5 and decreases sharply toward the opposite ends of the side surface when the permanent magnet 11 is not disposed between the circumferentially adjacent claw-shaped pole pieces 9b.

It is noted from the measured data that the effect of the permanent magnet 11 in reducing leakage flux to enhance output does not correspond with the amount of the permanent magnet 11 even if the permanent magnet 11 having a length equal to the entire length of the side surface 9c of the claw-shaped pole piece 9b is disposed between the circumferentially adjacent claw-shaped pole pieces 9b.

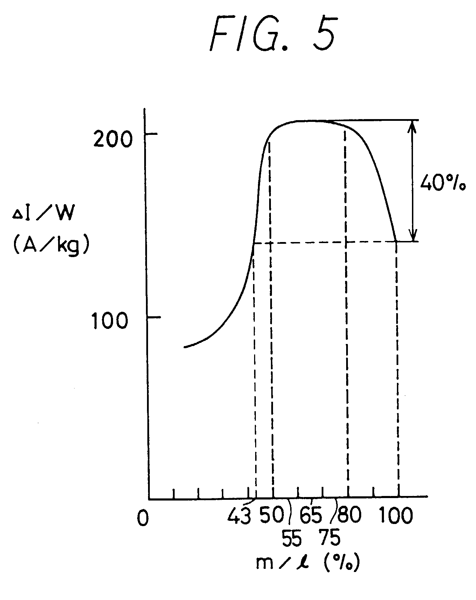

In this embodiment, the permanent magnet 11 is disposed in a region where leakage flux density is high in the parallelopiped space between the adjacent claw-shaped pole pieces 9b to reduce leakage flux more effectively. More concretely, the permanent magnet 11 having a length **m** is disposed at the longitudinally middle portion of the parallelopiped space having a length **l** between the adjacent claw-shaped pole pieces 9b so as to divide the space, that is, the side surface 9c of the claw-shaped pole piece 9b into two equal sections having the length 1/2 as shown in Fig. 3, and the ratio **m**/**l** is in the range of 50% to 80% as shown in Fig. 5.

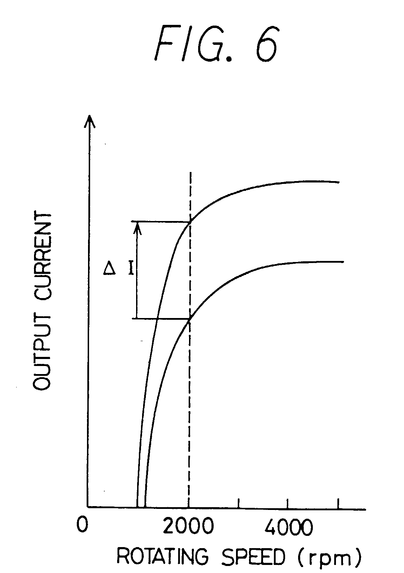

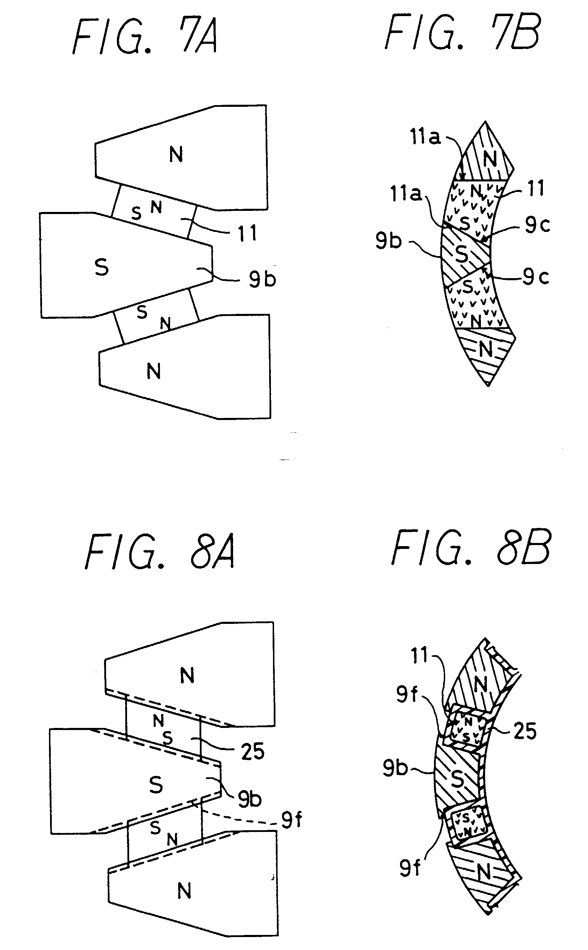

Fig. 5 shows measured data on the variation of specific output increment ΔI/W, where ΔI is output current increment and W is the weight of the permanent magnet 11, i.e., output increment ΔI per unit weight of the permanent magnet 11, with the ratio **m**/**l**. As is obvious from Fig. 5, the specific output increments ΔI/W for values of the ratio **m**/**l** in the range of 50% to 80% are greater than the specific output increment ΔI/W for the ratio **m**/**l** of 100%. The specific output current increment ΔI/W reaches a maximum value when the ratio **m**/**l** is about 65%, and the maximum value is greater than the specific output increment ΔI/W when the ratio **m**/**l** is 100% by about 40%. The output current increment ΔI is an increase in the output current attained by the use of the permanent magnets 11 as shown in Fig. 6.

The most significant cause of the specific output current increment ΔI/W which levels out substantially at a maximum in a range where the ratio **m**/**l** is in the range of 50% to 80% will be explained hereinafter.

As the cross-section area of the claw-shaped pole piece 9b perpendicular to the rotor axis decreases toward the extremity, the magnetic resistance of the claw-shaped pole piece increases. Consequently, it is difficult for magnetic flux to pass across the side surfaces 9c of the circumferentially adjacent claw-shaped pole pieces 9b in a region where the ratio **m**/**l** is greater than 80%. Since magnetic flux is able to pass easily across the side surfaces 9c of the circumferentially adjacent claw-shaped pole pieces 9b in a region where the ratio **m**/**l** is below 50%, magnetic flux is able to flow into a region not facing the permanent magnet. Accordingly, the leakage of magnetic flux can most effectively suppressed and effective magnetic flux that contributes to power generation can be increased when the ratio **m**/**l** is in the range of 50% to 80%. When taking the production tolerance and the aging of the permanent magnet (reduction in the magnetic force) into account, it is more preferable that the ratio **m**/**l** is in the range of 55% to 75%.

### Effect of the First Embodiment

The first embodiment increases the specific output increment, i.e., an output increment per unit weight of the permanent magnet 11 and hence needs the permanent magnets 11 of a relatively small weight smaller than that of the permanent magnets of the equivalent prior art alternator for a vehicle by 20% to 50%. Consequently, the alternator for a vehicle in the first embodiment has an improved capability to withstand high-speed operation.

Since the centrifugal force acting on the permanent magnets 11 having a relatively small weight is relatively low, the strength of the Lundell type magnetic poles 9 to withstand rotation can be improved.

Furthermore, since the necessary amount of the permanent magnet 11 is reduced and costs of the permanent magnets 11 is reduced, the alternator for a vehicle 1 provides excellent economic effect.

The use of common sintered ferrite magnets as the permanent magnets 11 is economical. The use of resin magnets having a specific weight smaller than that of sintered ferrite magnets as the permanent magnets 11 reduces the centrifugal force that acts on the permanent magnets 11, which improves the strength of the Lundell magnetic poles 9 to withstand rotation.

Since each permanent magnet 11 is disposed with its center of gravity located substantially at the middle of the parallelopiped space between the opposed side surfaces 9c of the adjacent claw-shaped pole pieces 9b, load resulting from the centrifugal force is distributed evenly to the circumferentially adjacent claw-shaped pole pieces 9b, which will improve the strength of the Lundell type magnetic poles 9.

### (Second Embodiment)

A second embodiment is described with reference to Fig. 7A and 7B. Fig. 7A is a development showing the positional relationship between claw-shaped pole pieces 9b and permanent magnets 11, and Fig. 7B is a cross-sectional view of the permanent magnets 11 and the claw-shaped pole pieces 9b cut along a plane perpendicular to the rotor axis.

As shown in Fig. 7B, the claw-shaped pole piece 9b has opposite inclined side surfaces 9c and a trapezoidal cross section tapered toward the radially inner surface, and the permanent magnet 11 has opposite inclined side surfaces 11a and a trapezoidal cross section tapered toward the radially outer surface and conforming to the cross section of a space between the circumferentially adjacent claw-shaped pole pieces 9b.

The arrangement of such permanent magnets 11 and the such claw-shaped pole pieces 9b holds the permanent magnets 11 from being caused to flay away radially from the Lundell magnetic poles 9 by the centrifugal force when the rotor rotates at a high rotating speed.

### (Third Embodiment)

A third embodiment is described with reference to Figs. 8A and 8B. Fig. 8A is a development showing the positional relation between claw-shaped pole pieces 9b and permanent magnets 11, and Fig. 8B is a sectional view of the permanent magnets 11 and the claw-shaped pole pieces 9b.

As shown in Fig. 8B, the permanent magnets 11 are enclosed by a resin case 25 formed by molding a nonmagnetic resin. The resin case 25 prevents the scattering of particles that may be produced by the abrasion of the permanent magnets 11 by the claw-shaped pole pieces 9b. The resin case 25 serves as a damping means against shocks caused by the vibrations of the automobile, which prevents the permanent magnets 11 from fissuring.

Shoulders 9f that engage with the outer edges of the resin case 25 are formed in the opposite side surfaces 9c of the claw-shaped pole paces 9b. The shoulders 9f prevents the permanent magnets 11 from being caused to fly away radially from the Lundell magnetic poles 9 by the centrifugal force when the rotor rotates at a high rotating speed.

In the foregoing description of the present invention, the invention has been disclosed with reference to specific embodiments thereof. It will, however, be evident that various modifications and changes may be made to the specific embodiments of the present invention without departing from the broader spirit and scope of the invention as set forth in the appended claims. Accordingly, the description of the present invention in this document is to be regarded in an illustrative, rather than restrictive, sense.

## Claims

1. An alternator for a vehicle comprising:
a rotor (8) having a plurality of pole pieces (9b) disposed circumferentially; and
permanent magnets (11) each disposed between a space formed by opposed side surfaces of adjacent two of said pole pieces (9b) and magnetized so as to suppress leakage magnetic flux across the claw-shaped pole pieces;
wherein each of said permanent magnets (11) is disposed at a longitudinally middle portion of said space and has a length so that a ratio thereof to the length of said space is in the range of 50% to 80%.

2. An alternator for a vehicle according to claim 1, wherein each of said permanent magnets (11) is disposed in a region where a density of leakage magnetic flux levels out substantially at a maximum.

3. An alternator for a vehicle according to claim 1, wherein each of said permanent magnets (11) is disposed so that its center of gravity coincides with a position substantially corresponding to the middle of said space.

4. An alternator for a vehicle according to claim 1, wherein said rotor (8) comprises a pair of pole cores disposed axially opposite to each other and each having a half of said pole pieces (9b) extending therefrom to mesh with each other.

5. An alternator for a vehicle according to claim 4, wherein said permanent magnets (11) comprise sintered ferrite magnets.

6. An alternator for a vehicle according to claim 4, wherein said permanent magnets (11) comprise resin magnets.

7. An alternator for a vehicle according to claim 4, wherein each of said claw-shaped pole pieces (9b) has opposite inclined side surfaces to form said space having a trapezoidal cross section tapered in a radially outer direction, and each of said permanent magnets (11) has a trapezoidal cross section tapered toward a radially outer surface and conforming to said space.

8. An alternator for a vehicle according to claim 4, wherein each of said permanent magnets (11) has a length so that the ratio to the length of said space is in the range of 55% to 75%.

9. An alternator for a vehicle according to claim 8, wherein each of said permanent magnets (11) is disposed so that its center of gravity coincides with a position substantially corresponding to the middle of said space.

10. An alternator for a vehicle according to claim 9, wherein said permanent magnets (11) comprise sintered ferrite magnets.

11. An alternator for a vehicle according to claim 10, wherein each of said claw-shaped pole pieces (9b) has opposite inclined side surfaces to form said space having a trapezoidal cross section tapered in a radially outer direction between adjacent two of said claw-shaped pole, and each of said permanent magnets (11) has a trapezoidal cross section tapered toward a radially outer surface and conforming to said space.

12. An alternator for a vehicle according to claim 4, wherein each of said permanent magnets (11) has a length so that a ratio to the length of said space is 65%.

13. An alternator for a vehicle according to claim 12, wherein said permanent magnets (11) comprise sintered ferrite magnets.

14. An alternator for a vehicle according to claim 13, wherein each of said claw-shaped pole pieces has opposite inclined side surfaces to form said space having a trapezoidal cross section tapered in a radially outer direction between adjacent two of said claw-shaped pole, and each of said permanent magnets has a trapezoidal cross section tapered toward a radially outer surface and conforming to said space.

## Patentansprüche

1. Wechselstromgenerator für ein Fahrzeug, umfassend:
einen Rotor (8) mit einer Vielzahl von umfangsbezüglich angeordneten Polstücken (9b); und
Permanentmagneten (11), die jeweils zwischen einem durch gegenüberliegende Seitenoberflächen von zwei benachbarten Polstücken (9b) gebildeten Raum angeordnet und derart magnetisiert sind, daß ein Streumagnetfluß über die klauenförmigen Polstücke hinaus unterdrückt wird;
wobei jeder der Permanentmagneten (11) an einem Längsmittelabschnitt des Raums angeordnet ist und eine derartige Länge aufweist, daß ein Verhältnis davon zur Länge des Raums im Bereich von 50% bis 80% liegt.

2. Wechselstromgenerator für ein Fahrzeug nach Anspruch 1, wobei jeder der Permanentmagneten (11) in einem Bereich, wo sich eine Streumagnetflußdichte im wesentlichen bei einem Maximum einstellt, angeordnet ist.

3. Wechselstromgenerator für ein Fahrzeug nach Anspruch 1, wobei jeder der Permanentmagneten (11) derart angeordnet ist, daß dessen Schwerpunkt mit einer im wesentlichen der Mitte des Raums entsprechenden Position zusammenfällt.

4. Wechselstromgenerator für ein Fahrzeug nach Anspruch 1, wobei der Rotor (8) ein Paar von Polkernen umfaßt, welche einander axial gegenüber angeordnet sind, wobei jeder eine davon ausgehende Hälfte dieser Polstücke (9b) aufweist, um ineinanderzugreifen.

5. Wechselstromgenerator für ein Fahrzeug nach Anspruch 4, wobei die Permanentmagneten (11) gesinterte Ferritmagneten umfassen.

6. Wechselstromgenerator für ein Fahrzeug nach Anspruch 4, wobei die Permanentmagneten (11) Harzmagneten umfassen.

7. Wechselstromgenerator für ein Fahrzeug nach Anspruch 4, wobei jedes der klauenförmigen Polstücke (9b) entgegengesetzt geneigte Seitenoberflächen zur Bildung des Raums mit einem trapezförmigen Querschnitt, welcher sich in Radialrichtung nach außen verjüngt, aufweist, und jeder der Permanentmagneten (11) einen trapezförmigen Querschnitt, welcher sich zu einer Radialaußenfläche hin verjüngt und dem Raum angepaßt ist, aufweist.

8. Wechselstromgenerator für ein Fahrzeug nach Anspruch 4, wobei jeder der Permanentmagneten (11) eine derartige Länge aufweist, daß das Verhältnis zur Länge des Raums im Bereich von 55% bis 75% liegt.

9. Wechselstromgenerator für ein Fahrzeug nach Anspruch 8, wobei jeder der Permanentmagneten (11) derart angeordnet ist, daß dessen Schwerpunkt mit einer im wesentlichen der Mitte des Raums entsprechenden Position zusammenfällt.

10. Wechselstromgenerator für ein Fahrzeug nach Anspruch 9, wobei die Permanentmagneten (11) gesinterte Ferritmagneten umfassen.

11. Wechselstromgenerator für ein Fahrzeug nach Anspruch 10, wobei jedes der klauenförmigen Polstücke (9b) entgegengesetzt geneigte Oberflächen zur Bildung des Raums mit einem trapezförmigen Querschnitt, welcher sich in Radialrichtung nach außen zwischen zwei angrenzenden klauenförmigen Polen verjüngt, aufweist, und wobei jeder der Permanentmagneten (11) einen trapezförmigen Querschnitt, der sich zu einer Radialaußenfläche hin verjüngt und dem Raum angepaßt ist, aufweist.

12. Wechselstromgenerator für ein Fahrzeug nach Anspruch 4, wobei jeder der Permanentmagneten (11) eine derartige Länge aufweist, daß ein Verhältnis zur Länge des Raums 65% beträgt.

13. Wechselstromgenerator für ein Fahrzeug nach Anspruch 12, wobei die Permanentmagneten (11) gesinterte Ferritmagneten umfassen.

14. Wechselstromgenerator für ein Fahrzeug nach Anspruch 13, wobei jedes der klauenförmigen Polstücke entgegengesetzt geneigte Seitenoberflächen zur Bildung des Raums mit einem trapezförmigen Querschnitt, welcher in Radialrichtung nach außen zwischen zwei angrenzenden klauenförmigen Polen verjüngt ist, aufweist, und jeder der Permanentmagneten einen trapezförmigen Querschnitt, welcher sich zu einer Radialaußenfläche hin verjüngt und dem Raum angepaßt ist, aufweist.

## Revendications

1. Alternateur pour véhicule comprenant :
un rotor (8) comportant une pluralité de pièces polaires (9b) disposées suivant la circonférence, et
des aimants permanents (11), disposés chacun dans un espace formé entre des surfaces latérales opposées de deux pièces adjacentes parmi lesdites pièces polaires (9b) et magnétisés de façon à supprimer le flux magnétique de fuite entre les pièces polaires en forme de griffes,
dans lequel chacun desdits aimants permanents (11) est disposé au niveau d'une partie longitudinalement médiane dudit espace, et présente une longueur telle que le rapport de celle-ci à la longueur dudit espace est compris dans la plage de 50 % à 80 %.

2. Alternateur pour véhicule selon la revendication 1, dans lequel chacun desdits aimants permanents (11) est disposé dans une région dans laquelle la densité de flux magnétique de fuite s'établit pratiquement à un maximum.

3. Alternateur pour véhicule selon la revendication 1, dans lequel chacun desdits aimants permanents (11) est disposé de façon que son centre de gravité coïncide avec une position correspondant pratiquement au milieu dudit espace.

4. Alternateur pour véhicule selon la revendication 1, dans lequel ledit rotor (8) comprend une paire de noyaux polaires disposés axialement à l'opposé l'un de l'autre, et comportant chacun une moitié desdites pièces polaires (9b) s'étendant à partir de celui-ci de façon à s'emboîter les unes entre les autres.

5. Alternateur pour véhicule selon la revendication 4, dans lequel lesdits aimants permanents (11) comprennent des aimants de ferrite frittée.

6. Alternateur pour véhicule selon la revendication 4, dans lequel lesdits aimants permanents (11) comprennent des aimants à base de résine.

7. Alternateur pour véhicule selon la revendication 4, dans lequel chacune desdites pièces polaires en forme de griffes (9b) comporte des surfaces latérales inclinées opposées de façon à former ledit espace présentant une section transversale trapézoïdale se réduisant suivant une direction orientée radialement vers l'extérieur, et chacun desdits aimants permanents (11) présente une section transversale trapézoïdale se réduisant en direction d'une surface radialement externe, et se conformant audit espace.

8. Alternateur pour véhicule selon la revendication 4, dans lequel chacun desdits aimants permanents (11) présente une longueur dont le rapport à la longueur dudit espace est dans la plage de 55 à 75 %.

9. Alternateur pour véhicule selon la revendication 8, dans lequel chacun desdits aimants permanents (11) est disposé de façon que son centre de gravité coïncide avec une position correspondant pratiquement au milieu dudit espace.

10. Alternateur pour véhicule selon la revendication 9, dans lequel lesdits aimants permanents (11) comprennent des aimants de ferrite frittée.

11. Alternateur pour véhicule selon la revendication 10, dans lequel chacune desdites pièces polaires en forme de griffes (9b) comporte des surfaces latérales inclinées opposées de façon à former ledit espace présentant une section transversale trapézoïdale se réduisant suivant une direction orientée radialement vers l'extérieur entre deux pôles adjacents parmi lesdits pôles en forme de griffes, et chacun desdits aimants permanents (11) présente une section transversale trapézoïdale se réduisant en direction d'une surface radialement externe, et se conformant audit espace.

12. Alternateur pour véhicule selon la revendication 4, dans lequel chacun desdits aimants permanents (11) présente une longueur telle que son rapport à la longueur dudit espace est de 65 %.

13. Alternateur pour véhicule selon la revendication 12, dans lequel lesdits aimants permanents (11) comprennent des aimants de ferrite frittée.

14. Alternateur pour véhicule selon la revendication 13, dans lequel chacune desdites pièces polaires en forme de griffes comporte des surfaces latérales inclinées opposées de façon à former ledit espace présentant une section transversale trapézoïdale se réduisant suivant une direction orientée radialement vers l'extérieur entre deux pôles adjacents parmi lesdits pôles en forme de griffes, et chacun desdits aimants permanents présente une section transversale trapézoïdale se réduisant en direction d'une surface radialement externe, et se conformant audit espace.
